# FASCICULE DE BREVET EUROPEEN

(11) **EP 3 631 090 B1**
(45) Date de publication et mention de la délivrance du brevet: **21.06.2023**
(21) Numéro de dépôt: 18726773.7
(22) Date de dépôt: 18.05.2018
(51) Int. Cl.: E01B 27/16, E01B 35/00, G01C 1/02, G01C 7/04, G01C 15/00, G01D 18/00, B61K 9/08, B61L 25/02

(54) **PROCÉDURE DE RÉGLAGE D'UN SYSTÈME DE MESURE, PROCÉDÉ DE GUIDAGE D'UNE MACHINE DE TRAVAUX FERROVIAIRES, ET SYSTÈME DE GUIDAGE ASSOCIÉ**
VERFAHREN ZUR STEUERUNG EINES MESSSYSTEMS, VERFAHEN ZUR FÜHRUNG EINER EISENBAHNBAUMASCHINE, UND ZUGEHÖRIGES FÜHRUNGSSYSTEM
METHOD FOR CONTROLLING A MEASURING SYSTEM, METHOD FOR GUIDING A RAILWAY CONSTRUCTION MACHINE, AND ASSOCIATED GUIDE SYSTEM

(30) Priorité: 29.05.2017 FR 1754679
(43) Date de publication de la demande: 08.04.2020
(73) Titulaire: Matisa Matériel Industriel S.A., 1023 Crissier (CH)
(72) Inventeur: KORBER, Nicolas, 1683 Brenles (CH); DEMARCO, Nicolino, 1020 Renens (CH); WENGER, Serge, 1040 Echallens (CH)
(74) Mandataire: Alatis
(86) Numéro de dépôt international: PCT/EP2018/063172
(87) Numéro de publication internationale: WO 2018/219699

(56) Documents cités:
- EP-A1- 1 418 273
- WO-A1-2009/015728
- FR-A1- 2 655 417
- FR-A1- 2 677 679
- JP-A- H10 266 107
- US-A1- 2003 097 235

## Description

### DOMAINE TECHNIQUE DE L'INVENTION

L'invention se rapporte au guidage de machines de travaux ferroviaires telles que des bourreuses ou des trains de renouvellement, et plus spécifiquement au réglage d'un système de mesure servant au guidage d'une machine de travaux ferroviaires.

### ETAT DE LA TECHNIQUE ANTERIEURE

Pour assurer le guidage de machines de travaux ferroviaires, il est courant de mettre en oeuvre des systèmes de guidage utilisant un chariot système de positionnement global satellitaire (GPS) et un guide laser, comme illustré dans le document US2003097235.

Il y a toutefois un besoin de permettre un guidage d'une machine de travaux ferroviaires sans géométrie géopositionnée ni points de référence absolue.

### EXPOSE DE L'INVENTION

L'invention vise à remédier aux inconvénients de l'état de la technique et à proposer une méthode et un système de guidage qui puissent être mis en oeuvre en temps réels sur un chantier sans temps d'arrêt excessifs de la machine de travaux ferroviaires, qui ne fassent pas recours à un système de localisation globale, et qui ne nécessitent pas de l'opérateur des connaissances de topographe.

Pour ce faire est proposé, selon un premier aspect de l'invention, une procédure de réglage d'un système de mesure comportant un tachéomètre monté sur un chariot porteur circulant sur une voie ferrée en travaux, une cible fixée sur une machine de travaux ferroviaires, un ensemble de données d'un tracé théorique de la voie ferrée, et un ensemble de données de positionnement de singularités topographiques remarquables, procédure selon laquelle :
- on fait circuler le chariot porteur sur la voie ferrée dans une direction de travail depuis une position de départ jusqu'à une position d'arrivée à proximité d'une singularité topographique d'arrivée répertoriée dans l'ensemble de données de positionnement de singularités topographiques remarquables ;
- on bloque le chariot porteur par rapport à la voie ferrée dans la position d'arrivée ;
- le chariot porteur étant bloqué dans la position d'arrivée, on effectue une visée de la singularité topographique d'arrivée à l'aide du tachéomètre, et on mesure au moins une distance, un angle azimutal et un angle d'élévation caractéristiques du positionnement relatif du tachéomètre par rapport à la singularité topographique d'arrivée,
- la machine de travaux ferroviaires ayant été amenée dans la position de départ, on effectue une visée de la cible, à l'aide du tachéomètre, et on mesure au moins une distance, un angle azimutal et un angle d'élévation caractéristiques du positionnement relatif du tachéomètre par rapport à la cible,
- on calcule des coordonnées de la position d'arrivée du chariot porteur dans un référentiel flottant, en fonction des mesures effectuées lors de la visée de la singularité topographique d'arrivée et de la visée de la cible, de données additionnelles relatives à la position de départ, ainsi que de données de positionnement de la singularité topographique d'arrivée lues dans l'ensemble de données de positionnement de singularités topographiques remarquables, et de données relatives au tracé théorique de la voie lues dans l'ensemble de données du tracé théorique de la voie, puis on mémorise les coordonnées de la position d'arrivée du chariot porteur dans le référentiel flottant.

La procédure permet de déterminer le positionnement du tachéomètre sans référence à un système de positionnement global, dans un référentiel flottant qui est celui de l'ensemble de données des singularités topographiques.

En pratique, le tachéomètre peut comporter un théodolite couplé à un télémètre, par exemple à visée infrarouge ou laser. Les instruments ont des sorties électroniques reliées à un circuit électronique de lecture, de stockage et de transmission. Le tachéomètre est de préférence pourvu d'une motorisation lui permettant de suivre une cible mouvante, et constitue ce qui est couramment appelé une station totale. La cible réfléchissante peut être un miroir ou, de préférence, un catadioptre, par exemple un prisme réflecteur tétraédrique.

Les opérations de déplacement et de blocage peuvent être accomplies par un opérateur, le cas échéant assisté par une assistance motorisée. Elles peuvent également être au moins partiellement automatisées. De même, les opérations de visée peuvent être effectuées par un opérateur, ou réalisées par un robot intégré au tachéomètre.

Le blocage du chariot porteur peut être effectué à l'aide de freins portant sur les roues du chariot ou directement sur les rails, ou par le déploiement de pieds en appui sur les rails ou le ballast, ou encore à l'aide d'une pince venant en prise avec l'un des rails. Suivant un mode de réalisation, l'action de blocage du chariot porteur par rapport à la voie ferrée inclut une mise à la verticale d'un axe de référence du tachéomètre. Ce réglage peut être fait en modifiant l'assiette du chariot porteur par rapport à la voie, ou en modifiant l'assiette de l'axe de pivotement par rapport au chariot porteur. De préférence, ce réglage d'assiette est automatique, en ce sens qu'il est effectué par des actionneurs en fonction de signaux délivrés par un ou plusieurs capteurs.

L'ensemble de données du tracé théorique de la voie peut le cas échéant être constitué par des coordonnées exprimées dans un référentiel topographique absolu. Alternativement, et de façon préférentielle, l'ensemble de données du tracé théorique de la voie contient des données définissant analytiquement la géométrie théorique de la voie, de préférence comme une succession de segments, les segments comportant de préférence des segments de droites et des arcs de cercle. En pratique, les données permettent de définir le tracé de la voie ferrée de façon univoque, par géométrique analytique. Les données contiennent pour chaque segment de droite une longueur, et pour chaque arc de cercle un rayon de courbure et une longueur curviligne.

L'ensemble de données de positionnement des singularités topographiques remarquables peut, le cas échéant, être constitué par des coordonnées des singularités topographiques dans une référentiel topographique absolu. Alternativement, et de façon préférentielle, l'ensemble de données de positionnement des singularités topographiques remarquables contient des données de positionnement relatif des singularités topographiques remarquables par rapport à la géométrie théorique de la voie, incluant de préférence une abscisse curviligne mesurée le long du tracé théorique de la voie, une distance mesurée perpendiculairement au tracé théorique de la voie et une hauteur par rapport au tracé théorique de la voie. En pratique, les données permettent de définir de façon univoque le positionnement relatif de chaque singularité topographique répertoriée par rapport à la voie ferrée. La donnée de distance pourra notamment être affectée d'un signe indiquant de quel côté de la voie se trouve la singularité topographique.

Suivant une mise en oeuvre particulière de la procédure, on procède de la manière suivante :
- avant de faire circuler le chariot porteur de la position de départ à la position d'arrivée, on bloque le chariot porteur par rapport à la voie ferrée dans la position de départ ;
- le chariot porteur étant bloqué dans la position de départ, on effectue, à l'aide du tachéomètre, une visée d'une singularité topographique de départ répertoriée dans l'ensemble de données de positionnement de singularités topographiques remarquables, et on mesure au moins une distance, et un angle d'élévation caractéristiques du positionnement relatif du tachéomètre par rapport à la singularité topographique de départ, les données additionnelles relatives à la position de départ comportant les mesures effectuées lors de la visée de la singularité topographique de départ.

Cette modalité de mise en oeuvre sera particulièrement utile pour acquérir des données additionnelles relatives à la position de départ, en particulier pour une première itération de la procédure.

Suivant une autre mise en oeuvre de la procédure, le chariot porteur dans la position de départ a des coordonnées connues et mémorisées dans le référentiel flottant, qui constituent les données additionnelles relatives à la position de départ. Cette variante sera particulièrement adaptée à des itérations ultérieures de la procédure. Lorsqu'avant la machine de travaux ferroviaires dans la position de départ, la position de la machine de travaux ferroviaires est connue, on prévoit de préférence d'amener la machine de travaux ferroviaires dans la position de départ en la faisant travailler et en calculant sa trajectoire par interpolation. Dans cette phase, la machine de travaux ferroviaires travaille et progresse sans que le tachéomètre intervienne. On utilise pour cette interpolation la connaissance que l'on a précédemment acquise de la position de départ du chariot porteur et de la position de la machine de travaux ferroviaires au début de la séquence de guidage par interpolation. On minimise ainsi les interruptions de l'avancée de la machine de travaux ferroviaires.

En pratique, les singularités topographiques remarquables incluent du matériel de voie, notamment des poteaux de caténaire.

Suivant un autre aspect de l'invention, celle-ci a trait à un procédé de guidage d'une machine de travaux ferroviaires à l'aide d'un système de mesure comportant un tachéomètre monté sur un chariot porteur circulant sur une voie ferrée en travaux, une cible fixée à la machine de travaux ferroviaires, un ensemble de données d'un tracé théorique de la voie ferrée, et un ensemble de données de positionnement de singularités topographiques remarquables. Ce procédé comporte plusieurs itérations, chaque itération mettant en oeuvre au moins une procédure de réglage du système de mesure telle que décrite précédemment, suivie, alors que le chariot porteur reste bloqué dans la position d'arrivée, d'une procédure de guidage de la machine de travaux ferroviaires par le système de guidage. La procédure de réglage permet d'établir un référentiel local du tachéomètre, utilisé durant la procédure de guidage pour guider la machine de travaux ferroviaires, de façon à ce que son travail se conforme au tracé souhaité de la voie ferrée, tel qu'il est défini par l'ensemble de données d'un tracé théorique de la voie ferrée.

Suivant un mode de réalisation, le procédé comporte une itération initiale comportant une procédure de réglage du système de mesure suivie, alors que le chariot porteur reste bloqué dans la position d'arrivée, de la procédure de guidage de la machine de travaux ferroviaires par le système de guidage. La procédure de réglage de l'itération initiale comporte notamment les étapes suivantes :
- avant de faire circuler le chariot porteur de la position de départ à la position d'arrivée, on bloque le chariot porteur par rapport à la voie ferrée dans la position de départ ;
- le chariot porteur étant bloqué dans la position de départ, on effectue, à l'aide du tachéomètre, une visée d'une singularité topographique de départ répertoriée dans l'ensemble de données de positionnement de singularités topographiques remarquables, et on mesure au moins une distance, et un angle d'élévation caractéristiques du positionnement relatif du tachéomètre par rapport à la singularité topographique de départ, les données additionnelles relatives à la position de départ comportant les mesures effectuées lors de la visée de la singularité topographique de départ.

De préférence, l'itération initiale est suivie par des itérations comportant chacune une procédure de réglage du système de mesure suivant laquelle le chariot porteur dans la position de départ a des coordonnées connues et mémorisées dans le référentiel flottant, qui constituent les données additionnelles relatives à la position de départ, cette procédure de réglage étant suivie, alors que le chariot porteur reste bloqué dans la position d'arrivée, de la procédure de guidage de la machine de travaux ferroviaires par le système de guidage.

La procédure de guidage de la machine de travaux ferroviaires peut se faire conformément à ce qui est pratiqué dans l'état de la technique. De préférence, la procédure de guidage de la machine de travaux ferroviaires par le système de guidage comporte les actions suivantes :
- on effectue, à l'aide du tachéomètre, des visées successives de la cible lorsque la machine de travaux ferroviaires progresse en travaillant sur la voie ferrée dans la direction de travail de la position de départ vers le chariot porteur, et on mesure lors de chacune des visées successives au moins une distance, un angle azimutal et un angle d'élévation caractéristiques du positionnement relatif de la cible par rapport au tachéomètre,
- on calcule des coordonnées courantes d'une position courante de la cible dans le référentiel flottant en fonction des mesures effectuées et des coordonnées de la position d'arrivée ;
- on pilote le positionnement de la machine de travaux ferroviaires en fonction des coordonnées courantes de la position courante de la cible .

En pratique, on interrompt la procédure de guidage de la machine de travaux ferroviaires par le système de guidage lorsque, au cours de la phase de guidage de la machine de travaux ferroviaires, la machine de travaux ferroviaires qui progresse sur la voie ferrée dans la direction de travail atteint une position prédéterminée par rapport au tachéomètre, puis on réitère la procédure itérative.

De préférence, les actions de mesures incluent une transmission de données bidirectionnelle par voie hertzienne entre le tachéomètre et un ordinateur de bord de la machine de travaux ferroviaires.

Suivant un autre aspect de l'invention, celle-ci a trait à un système de guidage d'une machine de travaux ferroviaires sur une voie ferrée en travaux, la machine de travaux ferroviaires ayant une portion avant, le système de guidage comportant :
- un chariot porteur apte à rouler sur la voie ferrée en travaux en avant de la machine de travaux ferroviaires, le chariot porteur étant pourvu d'un mécanisme de blocage apte à bloquer le chariot porteur par rapport à la voie ferrée en travaux ;
- une cible réfléchissante, apte à être solidarisée à la portion avant du véhicule ferroviaire ;
- un tachéomètre, supporté par le chariot porteur et apte à mesurer au moins un angle azimutal, un angle d'élévation et une distance entre le tachéomètre et la cible ;
- un dispositif de commande pour la mise en oeuvre de la procédure de réglage décrit précédemment du procédé de guidage décrit précédemment, le dispositif de commande comportant :
   - un ensemble de données de positionnement de singularités topographiques remarquables situées le long de la voie ferrée ;
   - un ensemble de données d'un tracé théorique de la voie ferrée ;
   - des moyens de calcul communiquant avec le tachéomètre et ayant accès à l'ensemble de données de positionnement de singularités topographiques remarquables, et à l'ensemble de données d'un tracé théorique de la voie ferrée.

De plus, l'ensemble de données du tracé théorique de la voie contient des données définissant analytiquement la géométrie théorique de la voie, de préférence comme une succession de segments, les segments comportant de préférence des segments de droites et des arcs de cercle.

De plus l'ensemble de données de positionnement des singularités topographiques remarquables contient des données de positionnement relatif des singularités topographiques remarquables par rapport à la géométrie théorique de la voie, incluant de préférence une abscisse curviligne mesurée le long du tracé théorique de la voie, une distance mesurée perpendiculairement au tracé théorique de la voie et une hauteur par rapport au tracé théorique de la voie.

### BREVE DESCRIPTION DES FIGURES

D'autres caractéristiques et avantages de l'invention ressortiront à la lecture de la description qui suit, en référence aux figures annexées, qui illustrent :
- la figure 1, certains éléments d'un système de guidage d'une machine de travaux ferroviaires selon l'invention ;
- la figure 2, d'autres éléments du système de guidage d'une machine de travaux ferroviaire de la figure 1 ;
- les figures 3 à 6, différentes étapes successives d'une procédure de réglage selon l'invention, pour régler le système de guidage de la figure 1;
- la figure 7, une procédure de guidage d'une machine de travaux ferroviaires faisant suite à la procédure de réglage des figures 3 à 6 ;
- les figures 8 à 9, différentes étapes successives d'une autre procédure de réglage selon l'invention, pour régler le système de guidage de la figure 1, suite à la procédure de guidage de la figure 7 ;
- la figure 10, une procédure de guidage d'une machine de travaux ferroviaires faisant suite à la procédure de réglage des figures 8 à 9.

Pour plus de clarté, les éléments identiques ou similaires sont repérés par des signes de référence identiques sur l'ensemble des figures.

### DESCRIPTION DÉTAILLÉE DE MODES DE REALISATION

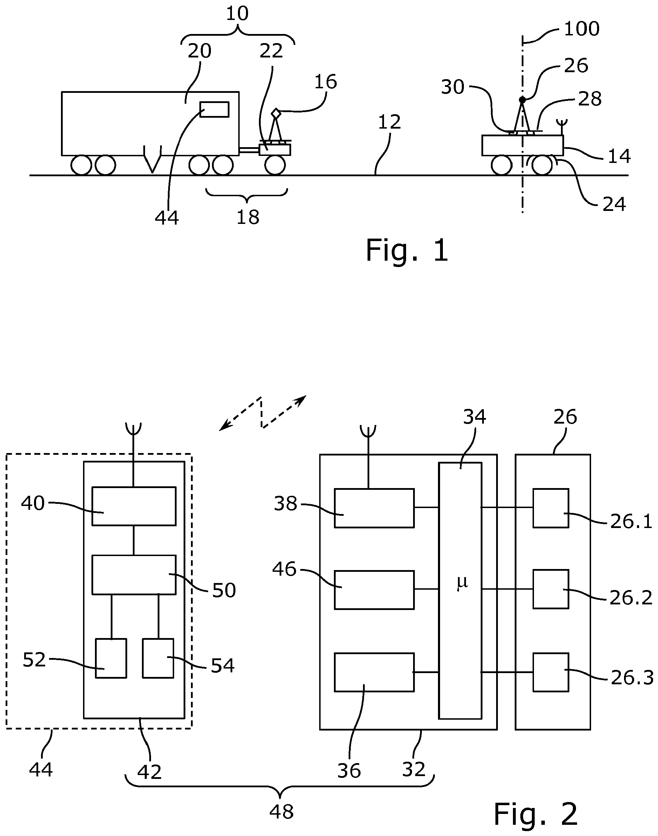

En référence à la figure **1****,** le système de guidage selon l'invention permet de guider une machine de travaux ferroviaires **10,** par exemple une bourreuse, travaillant sur une voie ferrée existante **12,** et dont l'intervention doit permettre, entre autres choses, de rectifier la trajectoire de la voie **12** pour que celle-ci soit plus conforme à un tracé théorique donné, ou, dans l'hypothèse où la voie existante **12** est conforme au tracé théorique, pour assurer que le passage de la machine de travaux ferroviaires ne détériore pas l'alignement existant.

Le système de guidage met en oeuvre un chariot porteur **14** apte à rouler sur la voie ferrée **12** en avant de la machine de travaux ferroviaires **10,** et une cible réfléchissante **16** solidarisée à une portion avant **18** du véhicule ferroviaire **10.** Cette portion avant peut être solidaire du châssis principal **20** de la machine de travaux ferroviaires **10,** ou constituée par un chariot cible **22** poussé par le wagon principal avant **20** de la machine de travaux ferroviaires **10.**

Le chariot porteur **14** est pourvu d'un mécanisme de blocage **24** apte à bloquer le chariot porteur **14** par rapport à la voie **12,** qui peut être constitué par un dispositif de freinage agissant sur une ou plusieurs roues du chariot porteur, ou par un ou plusieurs sabots venant en contact avec les rails, voire des pieds venant en appui contre les rails ou le ballast, ou une pince venant en prise avec l'un des rails.

Le chariot porteur **14** supporte un tachéomètre **26,** qui est monté pivotant autour d'un axe de pivotement **100** perpendiculaire à une plateforme **28** sensiblement horizontale du chariot. Le tachéomètre **26** est un dispositif en soi connu, qui permet, directement ou indirectement, de mesurer des angles azimutaux et d'élévation ainsi que la distance entre le tachéomètre **26** et une cible réfléchissante du type de la cible réfléchissante **16.**

Le chariot porteur **14** est équipé de moyens **30** permettant d'assurer l'horizontalité de la plateforme **28** et la verticalité de l'axe de pivotement **100.** Ces moyens **30** peuvent par exemple être intégrés à une suspension du chariot porteur ou aux moyens de blocage **24.** Alternativement, la verticalité de l'axe de pivotement **100** du tachéomètre **26** peut être obtenue par des moyens permettant d'incliner l'axe de pivotement **100** par rapport à la plateforme **28,** de manière à assurer la verticalité de l'axe lorsque la plateforme n'est pas horizontale. Le cas échéant, les moyens **30** permettant d'assurer la verticalité de l'axe de pivotement **100** du tachéomètre **26** peuvent être motorisés et pilotés à partir de signaux de mesure délivrés par un inclinomètre monté sur le tachéomètre **26** ou la plateforme **28.**

Comme illustré sur la figure **2****,** le tachéomètre **26** est relié à un circuit électronique de contrôle **32** comportant par exemple un microcontrôleur **34** apte à exécuter un programme de mesure pour lire des signaux d'angle d'azimut, d'angle d'élévation et de distance, émis par des capteurs correspondants **26.1, 26.2, 26.3** du tachéomètre **26,** à lire des données ou des commandes saisies sur une interface homme-machine **36** telle qu'un écran tactile, à émettre et recevoir des données par l'intermédiaire d'un circuit de télécommunication **38** par voie hertzienne avec un circuit de télécommunication **40** d'un ordinateur de bord **42** d'un poste de conduite **44** de la machine de travaux ferroviaires **10,** et à écrire ou lire des données stockées sur une mémoire locale ou distante **46.**

L'ordinateur de bord **42** et le circuit électronique de contrôle **32** constituent ensemble un dispositif de commande **48** comportant des moyens de calcul **50** qui ont accès à un ensemble de données **52** d'un tracé théorique de la voie ferrée **12,** et à un ensemble de données **54** de positionnement de singularités topographiques remarquables situées le long de la voie ferrée **12.** Ces singularités topographiques remarquables peuvent notamment être constituées par des équipements de voie ou de bord de voie, notamment des poteaux de caténaires, équipés chacun d'un catadioptre. Les mémoires de stockage des ensembles de données **52, 54** et les moyens de calcul **50** ont été ici illustrés comme des composants de l'ordinateur de bord **42,** mais leur localisation physique est sans incidence sur la mise en oeuvre du procédé selon l'invention, et peut être répartie de façon quelconque entre le circuit électronique de contrôle, l'ordinateur de bord, voire des éléments distants, pour autant que des moyens de communication existe pour relier entre eux les composants.

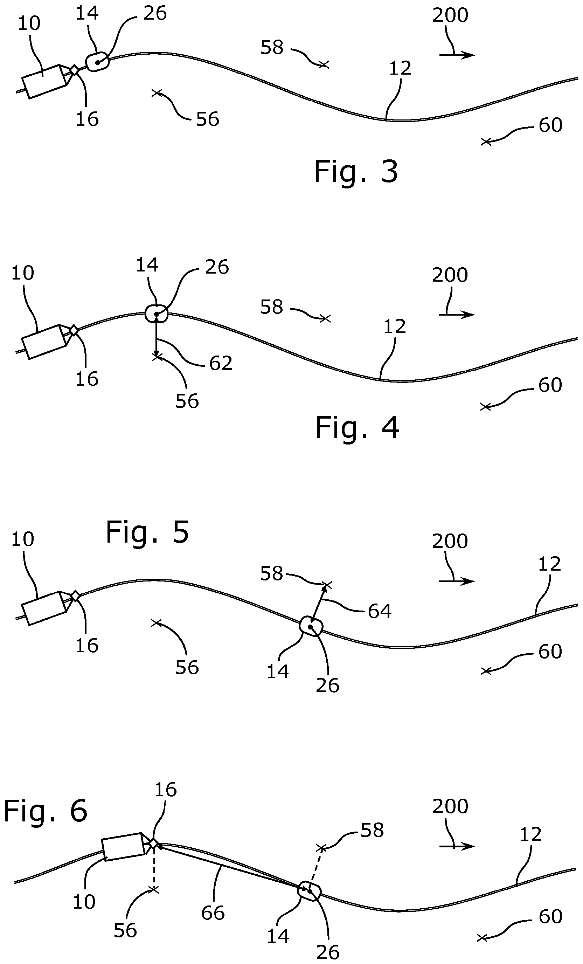

Sur les figures **3** à **6** est illustrée une procédure de réglage initial du système de mesure, en partant de l'hypothèse que les positions du chariot porteur **14** et de la machine de travaux ferroviaires **10** ne sont pas connues avec précision sur la figure **3****,** mais que certaines singularités topographiques **56, 58, 60** bordant la voie ferrée **12** sont répertoriées dans l'ensemble de données de singularités topographiques remarquables **54.**

Comme illustré sur la figure **4****,** on positionne tout d'abord le chariot porteur **14** à proximité d'une singularité topographique initiale **56** répertoriée dans l'ensemble de données de singularités topographiques remarquables **54.** On bloque le chariot porteur **14** par rapport à la voie ferrée dans la position initiale, à l'aide du mécanisme de blocage **24.** Le chariot porteur **14** étant bloqué dans la position initiale de la figure **4****,** on effectue une visée **62** de la singularité topographique initiale **56** à l'aide du tachéomètre **26,** et on mesure au moins une distance et un angle d'élévation caractéristiques du positionnement relatif du tachéomètre **26** par rapport à la singularité topographique initiale **56.**

Ces mesures sont en elles-mêmes insuffisantes pour déterminer totalement les coordonnées de la position initiale du tachéomètre **26,** mais permettent de définir un cercle théorique, centré sur la singularité topographique initiale **56,** où se trouve le tachéomètre **26** dans la position initiale.

Dans un deuxième temps, illustré sur la figure **5****,** on déplace le chariot porteur **14** sur la voie ferrée jusqu'à une première singularité topographique d'arrivée **58** répertoriée dans l'ensemble de données de singularités topographiques remarquables **54.** Comme précédemment, on bloque le chariot porteur **14** par rapport à la voie ferrée **10.** Le chariot porteur **14** étant bloqué dans la première position d'arrivée, on effectue une visée **64** de la première singularité topographique d'arrivée **58** à l'aide du tachéomètre **26,** et on mesure au moins une distance, un angle d'azimut et un angle d'élévation caractéristiques du positionnement relatif du tachéomètre **26** par rapport à la première singularité topographique d'arrivée **58.**

Comme les précédentes, ces mesures sont en elles-mêmes insuffisantes pour déterminer totalement les coordonnées de la première position d'arrivée du tachéomètre **26,** mais permettent de définir un cercle théorique, centré sur la première singularité topographique d'arrivée, où se trouve le tachéomètre dans la première position d'arrivée.

Dans un troisième temps, alors que le chariot porteur reste bloqué dans la première position d'arrivée, on déplace la machine de travaux ferroviaires **10** pour amener la cible **16** dans la position initiale, comme illustré sur la figure **6** et l'on effectue, à l'aide du tachéomètre **26** dans la première position d'arrivée, une visée **66** de la cible **16** positionnée sur la machine de travaux ferroviaires **10,** dans la position initiale. On mesure au moins une distance, un angle d'azimut et un angle d'élévation caractéristiques du positionnement relatif de la cible **16** dans la position initiale par rapport au tachéomètre **26** dans la première position d'arrivée.

Ces trois séries de trois mesures, alliées à la lecture des données relatives au positionnement de la singularité topographique initiale **56** et de la première singularité topographique d'arrivée **58,** permettent de calculer deux ensembles positions possibles pour la position initiale et la première position d'arrivée. Une lecture, dans l'ensemble de données **52** du tracé théorique de la voie ferrée, permet de déterminer et de retenir celui des deux ensembles de positions possibles qui est le plus proche du tracé théorique de la voie ferrée. On obtient ainsi finalement, à partir de trois mesures réalisées avec le tachéomètre **26,** de façon analytique et sans recours à un système de géolocalisation global, les coordonnées de la position initiale et de la première position d'arrivée dans le référentiel flottant tridimensionnel défini par l'ensemble de données de singularités topographiques remarquables et l'ensemble de données de la géométrique théorique de la voie. Ces coordonnées de la position initiale et de la première position d'arrivée peuvent par exemple être exprimées par une abscisse curviligne le long du tracé théorique de la voie ferrée et par un écart (en hauteur et latéralement) par rapport au tracé théorique de la voie ferrée.

Il est à noter qu'il est possible d'inverser l'ordre des visées **64, 66** effectuées à partir de la première position d'arrivée, et de commencer par exemple par la visée **66** de la cible **16,** pour autant que la machine de travaux ferroviaires **10** soit dans la position initiale. On notera également que la méthode a été exposée en supposant que l'on est en mesure de positionner la cible **16** dans la position initiale précédemment occupée par le tachéomètre **26.** Mais en pratique, si l'on constate que le positionnement de la cible **16** sur la machine de travaux ferroviaires **10** induit un écart systématique par rapport au positionnement initial du tachéomètre **26,** on pourra tenir compte de cet écart systématique connu en affinant l'algorithme de calcul. Par ailleurs, la méthode a été exposée sans tenir compte des approximations dans les mesures. Mais l'homme du métier saura introduire dans les calculs une prise en compte de ces incertitudes.

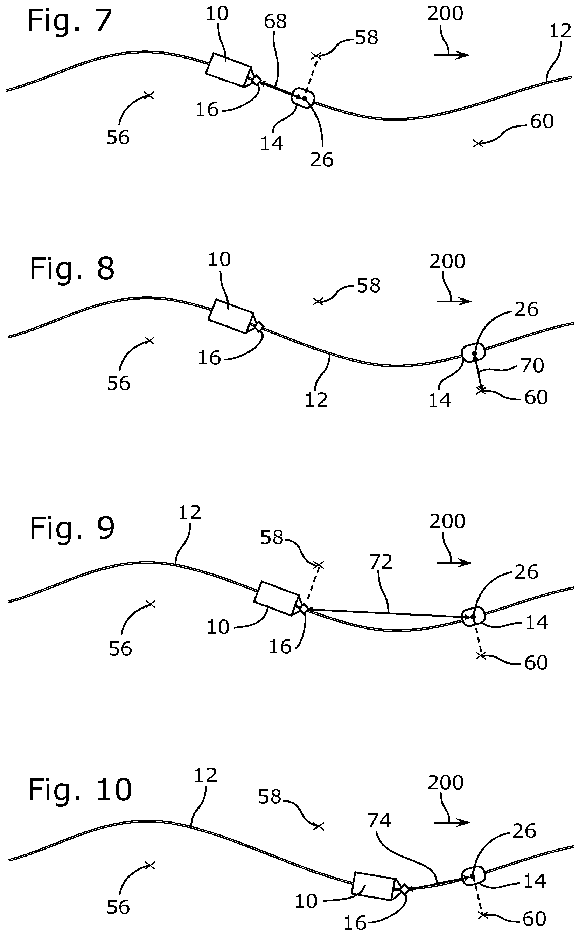

La procédure de réglage initial permettant de déterminer la position initiale et la première position d'arrivée étant achevée, on peut entamer une première une procédure de guidage de la machine de travaux ferroviaires **10** par le système de guidage, le chariot porteur **14** étant bloqué dans la première position d'arrivée. Pour ce faire, et comme illustré sur la figure **7****,** on effectue, à l'aide du tachéomètre **26,** des visées successives **68** de la cible **16** lorsque la machine de travaux ferroviaires **10** progresse en travaillant sur la voie ferrée dans la direction de travail **200** de la position initiale vers le chariot porteur **14,** et on mesure lors de chacune des visées successives **68** au moins une distance, un angle azimutal et un angle d'élévation caractéristiques du positionnement courant relatif de la cible par rapport au tachéomètre. Cette phase est de préférence automatisée et fait appel, de façon connue, à des moteurs intégrés au tachéomètre **26,** qui permettent à celui-ci de suivre les mouvements de la cible **16.** On calcule des coordonnées courantes d'une position courante de la cible **16** dans le référentiel flottant en fonction des mesures effectuées et des coordonnées de la première position d'arrivée. Ces coordonnées de la position courante de la cible **16** sont de préférence exprimées dans le référentiel flottant par une abscisse curviligne le long du tracé théorique de la voie ferrée et par un écart (en hauteur et latéralement) par rapport au tracé théorique de la voie ferrée. Enfin, on pilote le positionnement de la machine de travaux ferroviaires **10** en fonction des coordonnées courantes de la position courante de la cible **16.**

Lorsque la machine de travaux ferroviaires **10** atteint une position prédéterminée, par exemple une distance minimale prédéterminée par rapport au tachéomètre, on interrompt la phase de guidage de la machine de travaux ferroviaires **10** par le système de guidage, et l'on débute une nouvelle itération de guidage.

Cette nouvelle itération débute, comme chacune des suivantes, par une phase de déplacement et de positionnement du tachéomètre **26,** de la position d'arrivée de l'itération précédente, prise comme nouvelle position de départ, et illustrée sur la figure **7****,** à une nouvelle position d'arrivée, comme illustré sur la figure **8****,** à proximité d'une nouvelle singularité topographique **60** répertoriée dans l'ensemble de données de singularités topographiques remarquables **54.** Comme précédemment, on bloque le chariot porteur **14** par rapport à la voie ferrée **10.** Le chariot porteur **14** étant bloqué dans la nouvelle position d'arrivée, on effectue une visée **70** de la nouvelle singularité topographique d'arrivée **60** à l'aide du tachéomètre **26,** et on mesure au moins une distance, un angle d'azimut et un angle d'élévation caractéristiques du positionnement relatif du tachéomètre **26** par rapport à la nouvelle singularité topographique d'arrivée **60.**

Simultanément, il est possible de faire travailler la machine de travaux ferroviaires sur la voie ferrée jusqu'à la nouvelle position de départ du tachéomètre, face de la nouvelle singularité topographie de départ **58,** en calculant un écart entre voie réelle et voie théorique par interpolation. Lorsque la machine de travaux ferroviaires atteint la nouvelle position de départ, elle s'arrête, comme illustré sur la figure **9****.**

Puis, alors que le chariot porteur reste bloqué dans la nouvelle position d'arrivée, on effectue, à l'aide du tachéomètre **26** dans la nouvelle position d'arrivée, une visée **72** de la cible **16** positionnée sur la machine de travaux ferroviaires **10,** dans la nouvelle position de départ, comme illustré sur la figure **9****.** On mesure au moins une distance, un angle d'azimut et un angle d'élévation caractéristiques du positionnement relatif de la cible **16** dans la nouvelle position de départ par rapport au tachéomètre **26** dans la nouvelle position d'arrivée.

Ces deux séries de mesures, il est possible de déduire, le cas échéant avec la connaissance supplémentaire de la trajectoire théorique de la voie ferrée donnée par l'ensemble de données **52** du tracé théorique de la voie, les coordonnées de la nouvelle position d'arrivée, étant rappelé que la position de la cible **16** dans la nouvelle position de départ est connue, puisqu'elle coïncide avec la position d'arrivée du tachéomètre dans l'itération précédente. On peut alors débuter une nouvelle procédure de guidage de la machine de travaux ferroviaires, avec des visées successives **74** de la cible **16** alors que la machine de travaux ferroviaires **10** progresse en travaillant vers le chariot **14.**

Les procédures de réglage et de guidage décrites nécessitent une transmission de données en temps réel entre le tachéomètre **26** et l'ordinateur de bord **42** du poste de conduite **44** de la machine de travaux ferroviaires **10.** Dès lors, on peut répartir les calculs à effectuer de différentes manières entre le tachéomètre **26** et l'ordinateur de bord **42.** On peut par exemple minimiser les calculs au niveau du tachéomètre **26,** en prévoyant que tous les accès à l'ensemble de données **54** de singularités topographiques remarquables seront effectués par l'ordinateur de bords **42,** et que les calculs permettant de déterminer la position du tachéomètre **26** durant la phase de positionnement du chariot porteur **14** ou la position de la cible **16** durant la phase de guidage, soient effectuées par l'ordinateur de bord **42** de la machine de travaux ferroviaires **10.** À l'inverse, on peut envisager de localiser tout ou partie de ces calculs au niveau du tachéomètre **26,** pour faire de ce dernier un dispositif autonome universel.

Le cas échéant, le microcontrôleur **34** a accès à un ensemble de données de morphologie des singularités topographiques remarquables, par exemple un ensemble de données de photographies ou de pictogrammes des singularités topographiques, et est en mesure de diffuser ces représentations graphiques sur un écran de l'interface homme-machine **36** du circuit électronique de contrôle **32** du tachéomètre **26.**

De préférence, dans toutes les positions de départ ou d'arriver du chariot porteur 14, on tente de positionner celui-ci de manière que les visées **62, 64, 70,** des singularités topographiques **56, 58, 60,** soit perpendiculaires à la voie ferrée **12.** En pratique, on peut éviter la mesure de l'angle d'azimut pour les singularités topographiques **56, 58, 60,** si ce positionnement est effectué avec soin.

Naturellement, les exemples représentés sur les figures et discutés ci-dessus ne sont donnés qu'à titre illustratif et non limitatif.

## Revendications

1. Procédure de réglage d'un système de mesure comportant un tachéomètre (26) monté sur un chariot porteur (14) circulant sur une voie ferrée (12) en travaux, une cible (16) fixée sur une machine de travaux ferroviaires (10), un ensemble de données (52) d'un tracé théorique de la voie ferrée, et un ensemble de données (54) de positionnement de singularités topographiques remarquables, suivant laquelle :
- on fait circuler le chariot porteur (14) sur la voie ferrée (12) dans une direction de travail (200) depuis une position de départ jusqu'à une position d'arrivée à proximité d'une singularité topographique d'arrivée (58, 60) répertoriée dans l'ensemble de données (54) de positionnement de singularités topographiques remarquables ;
- on bloque le chariot porteur (14) par rapport à la voie ferrée (12) dans la position d'arrivée ;
- le chariot porteur (14) étant bloqué dans la position d'arrivée, on effectue une visée (64, 70) de la singularité topographique d'arrivée (58, 60) à l'aide du tachéomètre (26), et on mesure au moins une distance, un angle azimutal et un angle d'élévation caractéristiques du positionnement relatif du tachéomètre (26) par rapport à la singularité topographique d'arrivée (58, 60),
- la machine de travaux ferroviaires (10) ayant été amenée dans la position de départ, on effectue une visée (66, 72) de la cible (16), à l'aide du tachéomètre (26), et on mesure au moins une distance, un angle azimutal et un angle d'élévation caractéristiques du positionnement relatif du tachéomètre (26) par rapport à la cible (16),
- on calcule des coordonnées de la position d'arrivée du chariot porteur (14) dans un référentiel flottant, en fonction des mesures effectuées lors de la visée (62, 70) de la singularité topographique d'arrivée (58, 60) et de la visée (66, 72) de la cible (16), de données additionnelles relatives à la position de départ, ainsi que de données de positionnement de la singularité topographique d'arrivée (58, 60) lues dans l'ensemble de données (54) de positionnement de singularités topographiques remarquables, et de données relatives au tracé théorique de la voie lues dans l'ensemble de données (52) du tracé théorique de la voie, puis on mémorise les coordonnées de la position d'arrivée du chariot porteur (14) dans le référentiel flottant.

2. Procédure de réglage selon la revendication 1, **caractérisée en ce que** l'action de blocage du chariot porteur (14) par rapport à la voie ferrée (12) inclut une mise à la verticale d'un axe de référence (100) du tachéomètre.

3. Procédure de réglage selon l'une quelconque des revendications précédentes, **caractérisée en ce que** l'ensemble de données du tracé théorique de la voie contient des données définissant analytiquement la géométrie théorique de la voie, de préférence comme une succession de segments, les segments comportant de préférence des segments de droites et des arcs de cercle.

4. Procédure de réglage selon l'une quelconque des revendications précédentes, **caractérisée en ce que** l'ensemble de données de positionnement des singularités topographiques remarquables contient des données de positionnement relatif des singularités topographiques remarquables par rapport à la géométrie théorique de la voie, incluant de préférence une abscisse curviligne mesurée le long du tracé théorique de la voie, une distance mesurée perpendiculairement au tracé théorique de la voie et une hauteur par rapport au tracé théorique de la voie.

5. Procédure de réglage selon l'une quelconque des revendications précédentes, **caractérisée en ce que** :
- avant de faire circuler le chariot porteur (14) de la position de départ à la position d'arrivée, on bloque le chariot porteur (14) par rapport à la voie ferrée (12) dans la position de départ ;
- le chariot porteur (14) étant bloqué dans la position de départ, on effectue, à l'aide du tachéomètre (26), une visée (62) d'une singularité topographique de départ (56) répertoriée dans l'ensemble de données (54) de positionnement de singularités topographiques remarquables, et on mesure au moins une distance, et un angle d'élévation caractéristiques du positionnement relatif du tachéomètre par rapport à la singularité topographique de départ (56),
les données additionnelles relatives à la position de départ comportant les mesures effectuées lors de la visée (62) de la singularité topographique de départ (56).

6. Procédure de réglage selon l'une quelconque des revendications 1 à 4, **caractérisée en ce que** le chariot porteur (14) dans la position de départ a des coordonnées connues et mémorisées dans le référentiel flottant, qui constituent les données additionnelles relatives à la position de départ.

7. Procédure de réglage selon la revendication 6, **caractérisée en ce qu'**avant d'amener la machine de travaux ferroviaires (10) dans la position de départ, la position de la machine de travaux ferroviaires (10) est connue, et **en ce que** la machine de travaux ferroviaires (10) est amenée dans la position de départ en travaillant et en calculant sa trajectoire par interpolation.

8. Procédure de réglage selon l'une quelconque des revendications précédentes, **caractérisée en ce que** les singularités topographiques remarquables incluent du matériel de voie, notamment des poteaux de caténaire.

9. Procédé de guidage d'une machine de travaux ferroviaires (10) à l'aide d'un système de mesure comportant un tachéomètre (26) monté sur un chariot porteur (14) circulant sur une voie ferrée (12) en travaux, une cible (16) fixée à la machine de travaux ferroviaires (10), un ensemble de données (52) d'un tracé théorique de la voie ferrée, et un ensemble de données (54) de positionnement de singularités topographiques remarquables, **caractérisé en ce qu'**il comporte plusieurs itérations, chaque itération mettant en oeuvre au moins une procédure de réglage du système de mesure selon l'une quelconque des revendications précédentes, suivie, alors que le chariot porteur (14) reste bloqué dans la position d'arrivée, d'une procédure de guidage de la machine de travaux ferroviaires (10) par le système de guidage.

10. Procédé de guidage selon la revendication 9, **caractérisé en ce qu'**il comporte une itération initiale comportant une procédure de réglage du système de mesure selon la revendication 5, suivie, alors que le chariot porteur (14) reste bloqué dans la position d'arrivée, de la procédure de guidage de la machine de travaux ferroviaires (10) par le système de guidage.

11. Procédé de guidage selon la revendication 10, **caractérisé en ce que** l'itération initiale est suivie par des itérations comportant chacune une procédure de réglage du système de mesure selon la revendication 6, suivie, alors que le chariot porteur (14) reste bloqué dans la position d'arrivée, de la procédure de guidage de la machine de travaux ferroviaires (10) par le système de guidage.

12. Procédé de guidage selon l'une quelconque des revendications 9 à 11, **caractérisé en ce que** la procédure de guidage de la machine de travaux ferroviaires (10) par le système de guidage comporte les actions suivantes :
- on effectue, à l'aide du tachéomètre (26), des visées successives (68, 74) de la cible (16) lorsque la machine de travaux ferroviaires (10) progresse en travaillant sur la voie ferrée dans la direction de travail de la position de départ vers le chariot porteur, et on mesure lors de chacune des visées successives (68, 74) au moins une distance, un angle azimutal et un angle d'élévation caractéristiques du positionnement relatif de la cible (16) par rapport au tachéomètre (26),
- on calcule des coordonnées courantes d'une position courante de la cible (16) dans le référentiel flottant en fonction des mesures effectuées et des coordonnées de la position d'arrivée ;
- on pilote le positionnement de la machine de travaux ferroviaires (10) en fonction des coordonnées courantes de la position courante de la cible (16).

13. Procédé de guidage selon la revendication 12, **caractérisé en ce que** l'on interrompt la procédure de guidage de la machine de travaux ferroviaires (10) par le système de guidage lorsque, au cours de la phase de guidage de la machine de travaux ferroviaires, la machine de travaux ferroviaires qui progresse sur la voie ferrée dans la direction de travail atteint une position prédéterminée par rapport au tachéomètre (26), puis on réitère la procédure itérative.

14. Procédé de guidage selon l'une quelconque des revendications précédentes, **caractérisé en ce que** les actions de mesures incluent une transmission de données bidirectionnelle par voie hertzienne entre le tachéomètre (26) et un ordinateur de bord (42) de la machine de travaux ferroviaires.

15. Système de guidage d'une machine de travaux ferroviaires (10) sur une voie ferrée (12) en travaux, la machine de travaux ferroviaires (10) ayant une portion avant (18), le système de guidage comportant :
- un chariot porteur (14) apte à rouler sur la voie ferrée (12) en travaux en avant de la machine de travaux ferroviaires (10), le chariot porteur (14) étant pourvu d'un mécanisme de blocage (24) apte à bloquer le chariot porteur (14) par rapport à la voie ferrée (12) en travaux ;
- une cible (16) réfléchissante, apte à être solidarisée à la portion avant (18) du véhicule ferroviaire ;
**caractérisé en ce que** le système de guidage comporte :
- un tachéomètre (26), supporté par le chariot porteur (14) et apte à mesurer au moins un angle azimutal, un angle d'élévation et une distance entre le tachéomètre (26) et la cible (16) ;
- un dispositif de commande (48) comportant :
i. un ensemble de données (54) de positionnement de singularités topographiques remarquables situées le long de la voie ferrée ;
ii. un ensemble de données (52) d'un tracé théorique de la voie ferrée ;
iii. des moyens de calcul communiquant avec le tachéomètre et ayant accès à l'ensemble de données (54) de positionnement de singularités topographiques remarquables, et à l'ensemble de données (52) d'un tracé théorique de la voie ferrée, apte à calculer des coordonnées d'une position d'arrivée du chariot porteur (14) dans un référentiel flottant, en fonction de mesures effectuées lors d'une visée (62, 70) d'une singularité topographique d'arrivée (58, 60) et d'une visée (66, 72) de la cible (16), de données additionnelles relatives à la position de départ, ainsi que de données de positionnement de la singularité topographique d'arrivée (58, 60) lues dans l'ensemble de données (54) de positionnement de singularités topographiques remarquables, et de données relatives au tracé théorique de la voie lues dans l'ensemble de données (52) du tracé théorique de la voie, puis on mémorise les coordonnées de la position d'arrivée du chariot porteur (14) dans le référentiel flottant.
l'ensemble de données du tracé théorique de la voie contenant de préférence des données définissant analytiquement la géométrie théorique de la voie, de préférence comme une succession de segments, les segments comportant de préférence des segments de droites et des arcs de cercle,
l'ensemble de données de positionnement des singularités topographiques remarquables contenant de préférence des données de positionnement relatif des singularités topographiques remarquables par rapport à la géométrie théorique de la voie, incluant de préférence une abscisse curviligne mesurée le long du tracé théorique de la voie, une distance mesurée perpendiculairement au tracé théorique de la voie et une hauteur par rapport au tracé théorique de la voie.

## Patentansprüche

1. Verfahren zum Einstellen eines Messsystems, das ein Tachymeter (26), das auf einem Tragwagen (14) montiert ist, der auf einem in Arbeit befindlichen Eisenbahngleis (12) verkehrt, ein Ziel (16), das auf einer Eisenbahnarbeitsmaschine (10) befestigt ist, einen Datensatz (52) einer theoretischen Streckenführung des Eisenbahngleises und einen Datensatz (54) einer Positionierung bemerkenswerter topografischer Besonderheiten aufweist, wonach:
- der Tragwagen (14) auf dem Eisenbahngleis (12) in einer Arbeitsrichtung (200) von einer Startposition bis zu einer Ankunftsposition in der Nähe einer topografischen Besonderheit (58, 60) bei der Ankunft verkehrt, die in dem Datensatz (54) der Positionierung bemerkenswerter topografischer Besonderheiten aufgeführt ist;
- der Tragwagen (14) gegenüber dem Eisenbahngleis (12) in der Ankunftsposition blockiert wird;
- wenn der Tragwagen (14) in der Ankunftsposition blockiert ist, ein Anvisieren (64, 70) der topografischen Besonderheit (58, 60) bei der Ankunft mittels des Tachymeters (26) durchgeführt wird und mindestens ein Abstand, ein Azimutwinkel und ein Erhebungswinkel gemessen werden, die für die relative Positionierung des Tachymeters (26) gegenüber der topografischen Besonderheit (58, 60) bei der Ankunft kennzeichnend sind,
- nachdem die Eisenbahnarbeitsmaschine (10) in die Startposition geführt wurde, ein Anvisieren (66, 72) des Ziels (16) mittels des Tachymeters (26) durchgeführt wird und mindestens ein Abstand, ein Azimutwinkel und ein Erhebungswinkel gemessen werden, die für die relative Positionierung des Tachymeters (26) gegenüber dem Ziel (16) kennzeichnend sind,
- Koordinaten der Ankunftsposition des Tragwagens (14) in einem schwebenden Bezugssystem in Abhängigkeit von den Messungen, die während des Anvisierens (62, 70) der topografischen Besonderheit (58, 60) bei der Ankunft und des Anvisierens (66, 72) des Ziels (16) durchgeführt werden, von zusätzlichen Daten bezüglich der Startposition sowie Positionierungsdaten der topografischen Besonderheit (58, 60) bei der Ankunft, die aus dem Datensatz (54) der Positionierung bemerkenswerter topografischer Besonderheiten ausgelesen werden, und Daten bezüglich des theoretischen Streckenverlaufs des Gleises berechnet werden, die aus dem Datensatz (52) des theoretischen Streckenverlaufs des Gleises ausgelesen werden, dann die Koordinaten der Ankunftsposition des Tragwagens (14) in dem schwebenden Bezugssystem gespeichert werden.

2. Einstellverfahren nach Anspruch 1, **dadurch gekennzeichnet, dass** die Aktion des Blockierens des Tragwagens (14) gegenüber dem Eisenbahngleis (12) ein Bringen in die Vertikale einer Bezugsachse (100) des Tachymeters einschließt.

3. Einstellverfahren nach einem der vorstehenden Ansprüche, **dadurch gekennzeichnet, dass** der Datensatz des theoretischen Streckenverlaufs des Gleises Daten enthält, die die theoretische Geometrie des Gleises analytisch definieren, vorzugsweise als eine Aufeinanderfolge von Segmenten, wobei die Segmente vorzugsweise gerade und kreisförmige Segmente aufweisen.

4. Einstellverfahren nach einem der vorstehenden Ansprüche, **dadurch gekennzeichnet, dass** der Datensatz der Positionierung der bemerkenswerten topografischen Besonderheiten Daten der relativen Positionierung der bemerkenswerten topografischen Besonderheiten gegenüber der theoretischen Geometrie des Gleises enthält, einschließlich vorzugsweise einer kurvilinearen Abszissenachse, die entlang des theoretischen Streckenverlaufs des Gleises gemessen wird, eines Abstands, der senkrecht zu dem theoretischen Streckenverlauf des Gleises gemessen wird, und einer Höhe gegenüber dem theoretischen Streckenverlauf des Gleises.

5. Einstellverfahren nach einem der vorstehenden Ansprüche, **dadurch gekennzeichnet, dass:**
- vor dem Verkehren des Tragwagens (14) von der Startposition zu der Ankunftsposition der Tragwagen (14) gegenüber dem Eisenbahngleis (12) in der Startposition blockiert wird;
- wenn der Tragwagen (14) in der Startposition blockiert ist, mittels des Tachymeters (26) ein Anvisieren (62) einer topografischen Besonderheit (56) bei einem Start durchgeführt wird, die in dem Datensatz (54) der Positionierung bemerkenswerter topografischer Besonderheiten aufgeführt ist, und mindestens ein Abstand und ein Erhebungswinkel gemessen werden, die für die relative Positionierung des Tachymeters gegenüber der topografischen Besonderheit (56) bei dem Start kennzeichnend sind,
wobei die zusätzlichen Daten bezüglich der Startposition die Messungen aufweisen, die während des Anvisierens (62) der topografischen Besonderheit (56) bei dem Start durchgeführt werden.

6. Einstellverfahren nach einem der Ansprüche 1 bis 4, **dadurch gekennzeichnet, dass** der Tragwagen (14) in der Startposition bekannte und in dem schwebenden Bezugssystem gespeicherte Koordinaten besitzt, die die zusätzlichen Daten bezüglich der Startposition darstellen.

7. Einstellverfahren nach Anspruch 6, **dadurch gekennzeichnet, dass,** vor dem Führen der Eisenbahnarbeitsmaschine (10) in die Startposition, die Position der Eisenbahnarbeitsmaschine (10) bekannt ist, und dass die Eisenbahnarbeitsmaschine (10) bei einem Arbeiten und bei dem Berechnen ihrer Bahn durch Interpolation in die Startposition geführt wird.

8. Einstellverfahren nach einem der vorstehenden Ansprüche, **dadurch gekennzeichnet, dass** die bemerkenswerten topografischen Besonderheiten Gleismaterial, insbesondere Oberleitungsmasten einschließen.

9. Verfahren zum Leiten einer Eisenbahnbaumaschine (10) mittels eines Messsystems, das ein Tachymeter (26), das auf einem Tragwagen (14) montiert ist, der auf einem in Arbeit befindlichen Eisenbahngleis (12) verkehrt, ein Ziel (16), das an der Eisenbahnarbeitsmaschine (10) befestigt ist, einen Datensatz (52) einer theoretischen Streckenführung des Eisenbahngleises, und einen Datensatz (54) der Positionierung bemerkenswerter topografischer Besonderheiten aufweist, **dadurch gekennzeichnet, dass** es mehrere Iterationen aufweist, wobei jede Iteration mindestens ein Einstellverfahren des Messsystems nach einem der vorstehenden Ansprüche ausführt, gefolgt, während der Tragwagen (14) in der Ankunftsposition blockiert bleibt, von einem Leitverfahren der Eisenbahnarbeitsmaschine (10) durch das Leitsystem.

10. Leitverfahren nach Anspruch 9, **dadurch gekennzeichnet, dass** es eine anfängliche Iteration aufweist, die ein Einstellverfahren des Messsystems nach Anspruch 5 aufweist, gefolgt, während der Tragwagen (14) in der Ankunftsposition blockiert bleibt, von dem Leitverfahren der Eisenbahnarbeitsmaschine (10) durch das Leitsystem.

11. Leitverfahren nach Anspruch 10, **dadurch gekennzeichnet, dass** auf die anfängliche Iteration Iterationen folgen, die jeweils ein Einstellverfahren des Messsystems nach Anspruch 6 aufweisen, gefolgt, während der Tragwagen (14) in der Ankunftsposition blockiert bleibt, von dem Leitverfahren der Eisenbahnarbeitsmaschine (10) durch das Leitsystem.

12. Leitverfahren nach einem der Ansprüche 9 bis 11, **dadurch gekennzeichnet, dass** das Leitverfahren der Eisenbahnarbeitsmaschine (10) durch das Leitsystem die folgenden Aktionen aufweist:
- Durchführen, mittels des Tachymeters (26), von aufeinanderfolgenden Anvisierungen (68, 74) des Ziels (16), wenn die Eisenbahnarbeitsmaschine (10) auf dem Eisenbahngleis in der Arbeitsrichtung von der Startposition zu dem Tragwagen arbeitend fortschreitet, und Messen während jeder der aufeinanderfolgenden Anvisierungen (68, 74) mindestens eines Abstands, eines Azimutwinkels und eines Erhebungswinkels (26), die für die relative Positionierung des Ziels (16) gegenüber dem Tachymeter kennzeichnend sind,
- Berechnen aktueller Koordinaten einer aktuellen Position des Ziels (16) in dem schwebenden Bezugssystem in Abhängigkeit von den durchgeführten Messungen und den Koordinaten der Ankunftsposition;
- Lenken der Positionierung der Eisenbahnarbeitsmaschine (10) in Abhängigkeit von den aktuellen Koordinaten der aktuellen Position des Ziels (16).

13. Leitverfahren nach Anspruch 12, **dadurch gekennzeichnet, dass** das Leitverfahren der Eisenbahnarbeitsmaschine (10) durch das Leitsystem unterbrochen wird, wenn, im Verlauf der Phase des Leitens der Eisenbahnarbeitsmaschine, die Eisenbahnarbeitsmaschine, die in der Arbeitsrichtung auf dem Eisenbahngleis fortschreitet, eine zuvor bestimmte Position gegenüber dem Tachymeter (26) erreicht, dann das iterative Verfahren wiederholt wird.

14. Leitverfahren nach einem der vorstehenden Ansprüche, **dadurch gekennzeichnet, dass** die Messaktionen eine bidirektionale Datenübermittlung per Funkübertragungskanal zwischen dem Tachymeter (26) und einem Bordcomputer (42) der Eisenbahnarbeitsmaschine einschließen.

15. Leitsystem einer Eisenbahnarbeitsmaschine (10) auf einem in Arbeit befindlichen Eisenbahngleis (12), wobei die Eisenbahnarbeitsmaschine (10) einen vorderen Abschnitt (18) besitzt, wobei das Leitsystem aufweist:
- einen Tragwagen (14), der geeignet ist, um auf dem in Arbeit befindlichen Eisenbahngleis (12) vor der Eisenbahnarbeitsmaschine (10) zu fahren, wobei der Tragwagen (14) mit einem Blockiermechanismus (24) versehen ist, der geeignet ist, um den Tragwagen (14) gegenüber dem in Arbeit befindlichen Eisenbahngleis (12) zu blockieren;
- ein reflektierendes Ziel (16), das geeignet ist, um an dem vorderen Abschnitt (18) des Eisenbahnfahrzeugs fest verbunden zu werden;
**dadurch gekennzeichnet, dass** das Leitsystem aufweist:
- ein Tachymeter (26), das durch den Tragwagen (14) getragen wird und geeignet ist, um mindestens einen Azimutwinkel, einen Erhebungswinkel und einen Abstand zwischen dem Tachymeter (26) und dem Ziel (16) zu messen;
- eine Steuervorrichtung (48), die aufweist:
i. einen Datensatz (54) der Positionierung bemerkenswerter topografischer Besonderheiten, die entlang des Eisenbahngleises gelegen sind;
ii. einen Datensatz (52) eines theoretischen Streckenverlaufs des Eisenbahngleises;
iii. Berechnungsmittel, die mit dem Tachymeter kommunizieren und Zugriff auf den Datensatz (54) der Positionierung bemerkenswerter topografischer Besonderheiten und auf den Datensatz (52) eines theoretischen Streckenverlaufs des Eisenbahngleises besitzen, die geeignet sind, um Koordinaten einer Ankunftsposition des Tragwagens (14) in einem schwebenden Bezugssystem in Abhängigkeit von Messungen, die während eines Anvisierens (62, 70) einer topografischen Besonderheit (58, 60) bei der Ankunft und eines Anvisierens (66, 72) des Ziels (16) durchgeführt werden, von zusätzlichen Daten bezüglich der Startposition sowie Positionierungsdaten der topografischen Besonderheit (58, 60) bei der Ankunft, die aus dem Datensatz (54) der Positionierung bemerkenswerter topografischer Besonderheiten ausgelesen werden, und Daten bezüglich des theoretischen Streckenverlaufs des Gleises zu berechnen, die aus dem Datensatz (52) des theoretischen Streckenverlaufs des Gleises ausgelesen werden, wobei dann die Koordinaten der Ankunftsposition des Tragwagens (14) in dem schwebenden Bezugssystem gespeichert werden.
wobei der Datensatz des theoretischen Streckenverlaufs des Gleises vorzugsweise Daten enthält, die die theoretische Geometrie des Gleises analytisch definieren, vorzugsweise als eine Aufeinanderfolge von Segmenten, wobei die Segmente vorzugsweise gerade und kreisförmige Segmente aufweisen,
wobei der Datensatz der Positionierung der bemerkenswerten topografischen Besonderheiten Daten der relativen Positionierung bemerkenswerter topografischer Besonderheiten gegenüber der theoretischen Geometrie des Gleises enthält, einschließlich vorzugsweise einer kurvilinearen Abszissenachse, die entlang des theoretischen Streckenverlaufs des Gleises gemessen wird, eines Abstands, der senkrecht zu dem theoretischen Streckenverlauf des Gleises gemessen wird, und einer Höhe gegenüber dem theoretischen Streckenverlauf des Gleises.

## Claims

1. Method for adjusting a measurement system comprising a tacheometer (26) mounted on a carrier carriage (14) traveling on a railway track (12) undergoing work, a target (16) fixed to a railway work machine (10), a set of data (52) on a theoretical route of the railway, and a set of data (54) on the positioning of noteworthy topographic singularities, in which method:
- the carrier carriage (14) is made to travel on the railway track (12) in a working direction (200) from a starting position to an arrival position near an arrival topographic singularity (58, 60) listed in the set of data (54) on the positioning of noteworthy topographic singularities;
- the carrier carriage (14) is immobilized relative to the railway track (12) in the arrival position;
- with the carrier carriage (14) immobilized in the arrival position, a sighting (64, 70) of the arrival topographic singularity (58, 60) is carried out using the tacheometer (26), and at least a distance, an azimuth angle and an elevation angle which are characteristic of the relative positioning of the tacheometer (26) with respect to the arrival topographic singularity (58, 60) are measured,
- with the railway work machine (10) having been brought into the starting position, a sighting (66, 72) of the target (16) is carried out using the tacheometer (26), and at least a distance, an azimuth angle and an elevation angle which are characteristic of the relative positioning of the tacheometer (26) with respect to the target (16) are measured,
- coordinates of the arrival position of the carrier carriage (14) in a floating reference frame are calculated, on the basis of the measurements taken during the sighting (62, 70) of the arrival topographic singularity (58, 60) and the sighting (66, 72) of the target (16), additional data relating to the starting position, as well as data on the positioning of the arrival topographic singularity (58, 60) read from the set of data (54) on the positioning of noteworthy topographic features, and data relating to the theoretical route of the track read from the set of data (52) on the theoretical route of the track, and then the coordinates of the arrival position of the carrier carriage (14) are stored in the floating reference frame.

2. Adjustment method according to claim 1, **characterized in that** the action of immobilizing the carrier carriage (14) relative to the railway track (12) includes vertically setting a reference axis (100) of the tacheometer.

3. Adjustment method according to either of the preceding claims, **characterized in that** the set of data on the theoretical route of the track contains data analytically defining the theoretical geometry of the track, preferably as a succession of segments, the segments preferably comprising straight segments and circular arcs.

4. Adjustment method according to any of the preceding claims, **characterized in that** the set of data on the positioning of the noteworthy topographic singularities contains data on the relative positioning of the noteworthy topographic singularities with respect to the theoretical geometry of the track, preferably including a curvilinear abscissa measured along the theoretical route of the track, a distance measured perpendicularly to the theoretical route of the track and a height with respect to the theoretical route of the track.

5. Adjustment method according to any of the preceding claims, **characterized in that**:
- before making the carrier carriage (14) travel from the starting position to the arrival position, the carrier carriage (14) is immobilized relative to the railway track (12) in the starting position;
- with the carrier carriage (14) immobilized in the starting position, the tacheometer (26) is used to carry out a sighting (62) of a starting topographic singularity (56) listed in the set of data (54) on the positioning of noteworthy topographic singularities, and at least a distance and an elevation angle which are characteristic of the relative positioning of the tacheometer with respect to the starting topographic singularity (56) are measured,
the additional data relating to the starting position comprising the measurements taken during the sighting (62) of the starting topographic singularity (56).

6. Adjustment method according to any of claims 1 to 4, **characterized in that** the carrier carriage (14), in the starting position, has coordinates that are known and stored in the floating reference frame, which coordinates constitute the additional data relating to the starting position.

7. Adjustment method according to claim 6, **characterized in that**, before bringing the railway work machine (10) into the starting position, the position of the railway work machine (10) is known, and **in that** the railway work machine (10) is brought into the starting position by working and calculating its trajectory by interpolation.

8. Adjustment method according to any of the preceding claims, **characterized in that** the noteworthy topographic features include track material, in particular catenary poles.

9. Method for guiding a railway work machine (10) using a measurement system comprising a tacheometer (26) mounted on a carrier carriage (14) traveling on a railway track (12) undergoing work, a target (16) fixed to the railway work machine (10), a set of data (52) on a theoretical route of the railway track, and a set of data (54) on the positioning of noteworthy topographic singularities, **characterized in that** said method comprises a plurality of iterations, each iteration implementing at least one measurement system adjustment method according to any of the preceding claims, followed, while the carrier carriage (14) remains immobilized in the arrival position, by a method for guiding the railway work machine (10) by means of the guidance system.

10. Guidance method according to claim 9, **characterized in that** it includes an initial iteration comprising a measurement system adjustment method according to claim 5, followed, while the carrier carriage (14) remains immobilized in the arrival position, by the method for guiding the railway work machine (10) by means of the guidance system.

11. Guidance method according to claim 10, **characterized in that** the initial iteration is followed by iterations each comprising a measurement system adjustment method according to claim 6, followed, while the carrier carriage (14) remains immobilized in the arrival position, by the method for guiding the railway work machine (10) by means of the guidance system.

12. Guidance method according to any of claims 9 to 11, **characterized in that** the method for guiding the railway work machine (10) by means of the guidance system comprises the following actions:
- using the tacheometer (26) to carry out successive sightings (68, 74) of the target (16) when the railway work machine (10) progresses by working on the railway track in the working direction from the starting position towards the carrier carriage, and, during each of the successive sightings (68, 74), measuring at least a distance, an azimuth angle and an elevation angle which are characteristic of the relative positioning of the target (16) with respect to the tacheometer (26),
- calculating current coordinates of a current position of the target (16) in the floating reference frame on the basis of the measurements taken and the coordinates of the arrival position;
- controlling the positioning of the railway work machine (10) on the basis of the current coordinates of the current position of the target (16).

13. Guidance method according to claim 12, **characterized in that** the method for guiding the railway work machine (10) by means of the guidance system is interrupted when, during the phase of guiding the railway work machine, the railway work machine which progresses on the railway track in the working direction reaches a predetermined position with respect to the tacheometer (26), and then the iterative method is repeated.

14. Guidance method according to any of the preceding claims, **characterized in that** the measurement actions include bidirectional wireless data transmission between the tacheometer (26) and an on-board computer (42) of the railway work machine.

15. Guidance system for a railway work machine (10) on a railway track (12) undergoing work, the railway work machine (10) having a front portion (18), the guidance system comprising:
- a carrier carriage (14) capable of running on the railway track (12) undergoing work in front of the railway work machine (10), the carrier carriage (14) being provided with an immobilizing mechanism (24) capable of immobilizing the carrier carriage (14) relative to the railway track (12) undergoing work;
- a reflective target (16), capable of being secured to the front portion (18) of the railway vehicle;
**characterized in that** the guidance system comprises:
- a tacheometer (26), supported by the carrier carriage (14) and capable of measuring at least an azimuth angle, an elevation angle and a distance between the tacheometer (26) and the target (16);
- a control device (48) comprising:
i. a set of data (54) on the positioning of noteworthy topographic singularities located along the railway track;
ii. a set of data (52) on a theoretical route of the railway track;
iii. calculation means which communicate with the tacheometer and have access to the set of data (54) on the positioning of noteworthy topographic singularities and to the set of data (52) on a theoretical route of the railway track, which calculation means are capable of calculating coordinates of an arrival position of the carrier carriage (14) in a floating reference frame, on the basis of measurements taken during a sighting (62, 70) of an arrival topographic singularity (58, 60) and a sighting (66, 72) of the target (16), additional data relating to the starting position, as well as data on the positioning of the arrival topographic singularity (58, 60) read from the set of data (54) on the positioning of noteworthy topographic singularities, and data relating to the theoretical route of the track read from the set of data (52) on the theoretical route of the track, and then storing the coordinates of the arrival position of the carrier carriage (14) in the floating reference frame,
the set of data on the theoretical route of the track preferably containing data analytically defining the theoretical geometry of the track, preferably as a succession of segments, the segments preferably comprising straight segments and circular arcs,
the set of data on the positioning of the noteworthy topographic singularities preferably containing data on the relative positioning of the noteworthy topographic singularities with respect to the theoretical geometry of the track, preferably including a curvilinear abscissa measured along the theoretical route of the track, a distance measured perpendicularly to the theoretical route of the track and a height with respect to the theoretical route of the track.
